# EUROPÄISCHE PATENTANMELDUNG

(11) **EP 2 063 397 A2**
(43) Veröffentlichungstag der Anmeldung: **27.05.2009**
(21) Anmeldenummer: 08017595.3
(22) Anmeldetag: 08.10.2008
(51) Int. Cl.: G07B 15/00, G08G 1/00

(54) **Verfahren zur Erkennung mautpflichtiger Straßenabschnitte**

(30) Priorität: 21.11.2007 DE 102007056250
(71) Anmelder: Deutsche Telekom AG, 53113 Bonn (DE)
(72) Erfinder: Block, Thomas, 81927 München (DE); Mäthner, Nils, Dr., 53125 Bonn (DE); Hartinger, Horst, Dr., 8330 Feldbach (AT)

(57) **Zusammenfassung**

Verfahren zur Registrierung des Passierens eines Anschlusspunktes 6, 13, der auf einer ausgezeichneten Wegstrecke 1, insbesondere einem mautpflichtigen Straßenabschnitt, am Übergang zu einer anderen Wegstrecke 3, 4, 5, insbesondere einem nicht mautpflichtigen Straßenabschnitt oder einem abweichend zu tarifierenden anderen mautpflichtigen Straßenabschnitt, angeordnet ist, wobei mittels eines Ortungssystems die aktuelle Position ermittelt wird, wobei die aktuelle Position mit hinterlegten Anschlusspunkten 7, 13 verglichen wird, wobei eine Übereinstimmung der aktuellen Position mit einem Anschlusspunkt den entsprechenden Anschlusspunkt als aktuellen Anschlusspunkt 7, 13 markiert, wobei die Markierung des aktuellen Anschlusspunktes 7, 13 durch das Passieren eines auf der anderen Wegstrecke 3, 4, 5 angeordneten negativen Kontrollpunktes 10, 11, 18 aufgehoben wird.

## Beschreibung

Die Erfindung betrifft ein Verfahren zur Registrierung des Passierens eines Anschlusspunktes, der auf einer ausgezeichneten Wegstrecke, insbesondere einem mautpflichtigen Straßenabschnitt, am Übergang zu einer anderen Wegstrecke, insbesondere einem nicht mautpflichtigen Straßenabschnitt oder einem abweichend zu tarifierenden anderen mautpflichtigen Straßenabschnitt, angeordnet ist, wobei mittels eines Navigationssystems die aktuelle Position ermittelt wird, wobei die aktuelle Position mit hinterlegten Anschlusspunkten verglichen wird, wobei eine Übereinstimmung der aktuellen Position mit einem Anschlusspunkt den entsprechenden Anschlusspunkt als aktuellen Anschlusspunkt markiert. Die Erfindung betrifft zudem ein System zur Umsetzung des Verfahrens und einen Datensatz zur Verwendung in dem Navigationssystem.

Für die streckenbezogene Erhebung von Straßenbenutzungsentgelten ("Maut") sind diverse Verfahren zur Erkennung der mautpflichtigen Strasse bekannt. Einerseits ist es beispielsweise aus Frankreich bekannt, an Anschlusspunkten mautpflichtiger Streckenabschnitte Zahlstationen einzurichten, um individuell für einzelne Fahrten die entsprechenden Gebühren zu erheben. Aus Österreich sind zudem Bakensysteme bekannt, die sich einer straßenseitigen Infrastruktur, insbesondere in Form aufgestellter Funkstationen (Baken), bedienen, über die eine digital kodierte Kurzweg-Übertragung individuell nutzbarer Daten zwischen Fahrzeug und Bake stattfindet. Solche Zahlstationen/Bakensysteme sind für komplexe Straßennetze relativ aufwendig, da eine große Zahl von Stationen installiert und gewartet werden muss.

Zudem sind satellitenbasierte Verfahren bekannt und beispielsweise in Deutschland aktiv, bei denen zwischen dezentraler und zentraler Erkennung der Erhebungsstellen unterschieden wird. Ein dezentrales satellitenbasiertes Mauterhebungsverfahren ist aus DE 43 44 433 A1 bekannt. Bei diesem System wird die mittels eines GNSS-Empfängers ("*Global Navigation Satellite System*") laufend festgestellte Fahrzeugposition mit den gespeicherten Ortskoordinaten von Autobahn Anschlusspunkten, also von Ein- und Ausfahrten, verglichen. Die aufgrund passierter Anschlusspunkte erkannten mautpflichtigen Abschnitte werden an eine Zentrale zur Abrechnung übergeben. Eine Kontrolle der ermittelten Werte findet in dem System nicht statt.

In der EP 1 537 541 A1 wird ein ähnliches Verfahren offenbart, das aufgrund passierter Anschlusspunkte mautpflichtige Abschnitte ermittelt und anschließend prüft, inwieweit innerhalb eines vorgebbaren Bereiches um die Auffahrt herum die Orientierung des Fahrzeugs mit der für das Auffahren auf den mautpflichtigen Abschnitt charakteristischen Orientierung übereinstimmt. Zusätzlich zu dieser Kontrolle wird vorgeschlagen, das Passieren auf dem mautpflichtigen Abschnitt liegender Kontrollpunkte zu überprüfen. Aus der Anzahl der passierten Anschlusspunkte wird die Maut für die Strecke berechnet.

Im Falle engmaschiger Straßennetze mit nahe gelegenen Parallelstraßen und bei schlechtem GNSS-Empfang kann es bei diesem Verfahren allerdings zu Fehlern in der Berechnung kommen, die auch durch das Vorsehen der Kontrollpunkte nicht vermieden werden können. So kann ein Fahrzeug nach Verlassen des mautpflichtigen Abschnitts auf einer nahe dem mautpflichtigen Abschnitt gelegenen Nebenstrecke in den Einzugsbereich des Kontrollpunktes gelangen, der dem soeben passierten Anschlusspunkt zugeordnet ist. Dann würde dieser Abschnitt noch als mautpflichtig registriert.

Aufgabe der Erfindung ist es nunmehr, ein Verfahren zu schaffen, das auf Satellitennavigation beruht, sich mit einfachen Mitteln kostengünstig umsetzen lässt und eine hohe Sicherheit bei der Erkennung ausgezeichneter Wegstrecken, insbesondere bei der Erkennung von Anschlusspunkten mautpflichtiger Strecken, bietet. Zudem ist es Aufgabe der Erfindung, ein System respektive einen Datensatz zur Umsetzung des Verfahrens zu schaffen.

Diese Aufgaben werden durch das Verfahren nach Anspruch 1, das System nach Anspruch 9 und den Datenträger nach Anspruch 11 gelöst. Vorteilhafte Ausgestaltungen sind in den jeweiligen Unteransprüchen genannt.

Eine wesentliche Grundidee der Erfindung liegt darin, negative Kontrollpunkte einzuführen, die den Anschlusspunkten zugeordnet sind und die beim Befahren der herkömmlichen Wegstrecke, insbesondere der freien Nebenstrecke, passiert werden. Die negativen Kontrollpunkte werden dazu genutzt, die Markierung, die ein aktueller Anschlusspunkt erfahren hat, durch das Passieren des auf der herkömmlichen Wegstrecke angeordneten negativen Kontrollpunktes aufzuheben.

Dabei ist es vorteilhaft, zudem die aus dem Stand der Technik bekannten positiven Kontrollpunkte zu definieren, die beim Befahren der ausgezeichneten Wegstrecke, insbesondere dem mautpflichtigen Streckenabschnitt, passiert werden und damit die Markierung bestätigen. Dabei macht das frühzeitig registrierte Passieren eines negativen Kontrollpunktes das zufällige und fehlerhafte Registrieren eines positiven, die Markierung des aktuellen Anschlusspunktes bestätigenden Kontrollpunktes, unmöglich. Das gewissermaßen noch auf das Erkennen eines positiven Kontrollpunktes sensible System wird durch das Passieren des negativen Kontrollpunktes deaktiviert.

Das Merkmal "Anschlusspunkt" soll dabei gewissermaßen eine Grenze zwischen ausgezeichneter und "herkömmlicher" Wegstrecke definieren. Der Anschlusspunkt muss jedoch nicht unbedingt auf der Auf- oder Abfahrt einer Autobahn liegen. In der Praxis wird er bevorzugt so auf dem zu erkennenden mautpflichtigen Streckenabschnitt angeordnet, dass er diesen eindeutig kennzeichnet und mit sonstigen Streckenabschnitten möglichst wenig interferiert.

Es ist vorteilhaft und nahezu unabdingbar, die negativen und positiven Kontrollpunkte derart zu definieren, dass zwischen dem Anschlusspunkt und den zugeordneten Kontrollpunkten jeweils eine ununterbrochene Verbindung durch eine Wegstrecke besteht. Damit wird gewährleistet, dass das den Anschlusspunkt passierende Fahrzeug auf jeden Fall auch einen der Kontrollpunkte passiert. Dabei soll die eventuelle Unterbrechung durch einen normalerweise nicht für den Durchgangsverkehr geeigneten Weg, wie einem Feldweg, dem Merkmal "ununterbrochen" nicht abträglich sein.

Es sicherlich auch vorteilhaft, wenn die Wegstrecken zwischen Anschlusspunkt und den zugeordneten Kontrollpunkten unmittelbar sind und keine "Umwege" enthalten. Die Kontrollpunkte sollten so definiert werden, dass sie einerseits in unmittelbarer Nähe des Anschlusspunktes, aber dennoch außerhalb der geringsten Auflösung des Navigationssystems liegen, um Überschneidungen in der Abdeckung zu vermeiden.

Die Wahl des Abstandes zwischen Anschlusspunkt und Kontrollpunkt sowie der Erkennungsradien wird durch verschiedene Faktoren beeinflusst, insbesondere die Länge des zu erkennenden mautpflichtigen Streckenabschnitts und die möglichen Positionierungsfehler des Navigationssystems. In der Regel werden Anschlusspunkt und Kontrollpunkt überlappungsfrei auf dem zu erkennenden Streckenabschnitt angeordnet, wobei auch eine Überdeckung sonstiger Streckenabschnitte nach Möglichkeit vermieden wird. Sollen kurze Streckenabschnitte erkannt werden, kann dies zu möglichst kleinen Erkennungsradien zwingen. Diese müssen jedoch mindestens so groß sein, dass auch unter dem Einfluss bekannter Fehler des Navigationssignals eine zuverlässige Erkennung gewährleistet werden kann; Ungefähr 40m gelten hier als hinreichend.

Einen weiteren Einflussfaktor kann die Geschwindigkeit des Fahrzeugs darstellen. Bei Positionsinformationen im zeitlichen Intervall von 1 Sekunde ergeben für einen PKW, der sich mit einer Geschwindigkeit von 200km/h bewegt, Positionsmeldungen im Abstand von etwa 55m. Daher ist es vorteilhaft, die Erkennungsradien hinreichen groß zu wählen. Wenn das bei kurzen zu erkennenden Streckenabschnitten nicht möglich ist, können alternativ virtuelle Zwischenpositionen durch lineare Approximation berechnet werden. So wird sichergestellt, dass die Positionspunkte innerhalb des durchfahrenen Erkennungskreises liegen.

Diese Überlegungen zeigen, dass die Modellierung mit Anschlusspunkt und positivem Kontrollpunkt auf dem mautpflichtigen Streckenabschnitt bei kurzen Streckenabschnitten an Grenzen stößt. Insbesondere in diesen Fällen lässt sich das Verfahren so ausgestalten, dass auf die Verwendung der positiven Kontrollpunkte verzichtet wird. Ein Streckenabschnitt wird dabei durch seinen Anschlusspunkt erkannt, sofern er nicht innerhalb eines wählbaren Plausibilitätskriteriums (vorteilhaft innerhalb einer bestimmten Distanz) durch einen negativen Kontrollpunkt als ungültig deaktiviert wird. Weiterhin kann eine positive Bestätigung auch aus der Erkennung des nachfolgenden Anschlusspunktes auf dem mautpflichtigen Straßennetz gewonnen werden.

Es sei hier betont, dass Anschlusspunkte und Kontrollpunkte "imaginäre" Punkte sind, die beispielsweise in den Kartendaten oder einem parallelen Datensatz vermerkt sind und für das Navigationssystem abrufbar sind. Dort können sie mit ihren Ortskoordinaten definiert sein und mit einem aktiven umgebenden Bereich in Verbindung gebracht werden. Wenn das Navigationssystem, das ständig die aktuellen Positionsdaten des Fahrzeugs ermittelt, das Überfahren eines solchen Bereichs feststellt, wird das für die weitere Verarbeitung registriert. Auf diese Weise erkennt das erfindungsgemäße Verfahren ausgezeichnete, weil vielleicht mautpflichtige, Straßenabschnitte auf der Basis von Satellitennavigation und hat gegenüber bekannten Verfahren den Vorteil der erhöhten Erkennungsqualität bei engmaschigen Straßennetzen, bei engen Straßenführungen mit hoher Parallelität und bei Straßenabschnitten mit kritischem GNSS-Empfang, wie Tunneln. Zudem kann auf aufwendige Zusatzmaßnahmen, wie Stützbaken, verzichtet werden.

Zur Modellierung der Referenzpunkte, also der Anschlusspunkte und der Kontrollpunkte stehe verschiedene Modelle zur Verfügung: Die jeweilige Ortskoordinate eines Referenzpunktes kann mit einem mit Toleranzkreis (Radius) oder einem Toleranzquadrat (Kantenlänge) versehen werden. Oder die Ortskoordinate eines Referenzpunktes wird mit einer Toleranz und einer Richtung (Winkel einschließlich Toleranz) angegeben. Auch die Modellierung mittels einer Ortskoordinate mit Toleranz und Richtungsverlauf (mehrere zu durchfahrende Winkel einschließlich Toleranzen) ist möglich.

Zusammengefasst funktioniert eine vorteilhafte Version des Verfahrens so, dass zunächst ein dem mautpflichtigen Streckenabschnitt zugeordneter Anschlusspunkte erkannt wird und durch das Erkennen "aktiv geschaltet", also markiert wird. Darauffolgend muss mindestens ein dem Anschlusspunkt zugeordneter Kontrollpunkt erkannt werden; wobei in der Modellierung für kritische Abschnitte auch mehrere Kontrollpunkte festgelegt werden können. Wird nun ein positiver Kontrollpunkt erkannt, dann wird der markierte Anschlusspunkt als korrekt akzeptiert, da davon auszugehen ist, dass tatsächlich der mautpflichtige Streckenabschnitt befahren wird. Wird ein negativer Kontrollpunkt erkannt, merkt das System, dass sich das Fahrzeug nicht mehr oder doch nicht auf dem mautpflichtigen Streckenabschnitt befindet und deaktiviert den aktiv geschalteten Anschlusspunkt. Die Höhe der Maut kann dann berechnet werden über die Anzahl der passierten Paarungen von Anschlusspunkt und dazugehörigem positiven Kontrollpunkt. Dabei identifiziert jeder Anschlusspunkt einen spezifischen Streckenabschnitt, welchem eine mautpflichtige Streckenlänge und ein entsprechender Preis je Fahrzeugklasse zugeordnet werden kann. Wird die Autobahn verlassen, so wird wohl der Anschlusspunkt, aber nicht der zugehörige positive sondern der negative Kontrollpunkt registriert.

Um für die Maut-Berechnung berücksichtigt zu werden, darf also kein dem Anschlusspunkt zugeordneter negativer Kontrollpunkt erkannt werden, da ein solcher ein definiertes Verlassen des mautpflichtigen Straßennetzes kennzeichnen würde. Dabei können einem Anschlusspunkt beliebig viele negative Kontrollpunkte zugeordnet sein; die in der Modellierung alle Möglichkeiten zum Verlassen oder Nicht-Befahren des mautpflichtigen Netzes abdecken sollten.

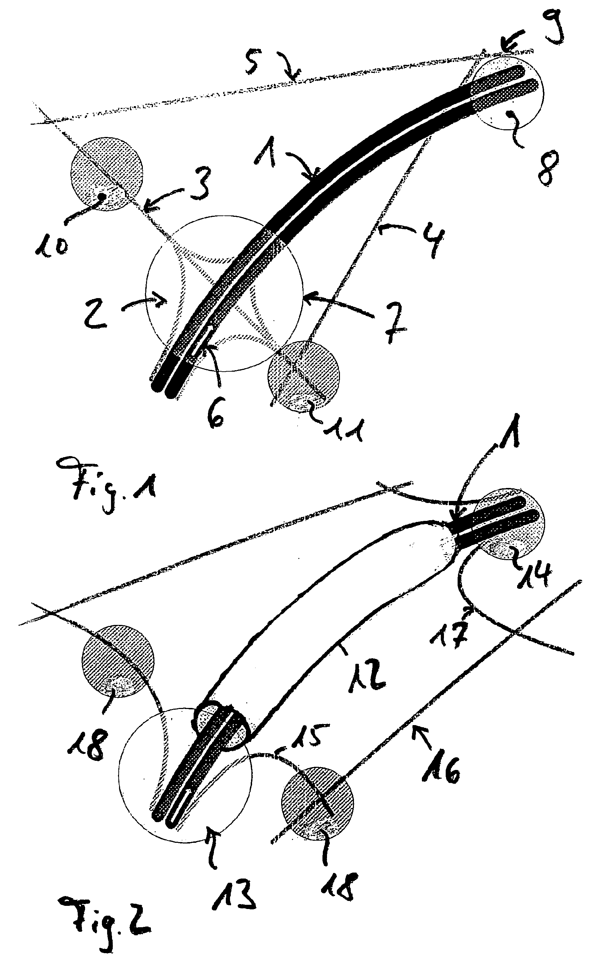

Nachfolgend wird die Erfindung anhand der Figuren 1 und 2 näher erklärt. Dabei zeigen:
- **Figur 1**: eine typische Streckensituation und
- **Figur 2**: eine andere typische Streckensituation.

Figur 1 zeigt ein typisches Ausführungsbeispiel der Erfindung. Dargestellt ist eine mautpflichtige Autobahn 1 mit einem Autobahnkreuz 2, das im Kleeblatt angeordnete mit Ab- und Zufahrten aufweist. Diese führen auf eine nicht mautpflichtige Landstraße 3. An Abzweigungen zweigt die Landstraße 3 in weitere Landstraßen 4 und 5 ab. Beim Befahren der Autobahn 1 in Richtung des Pfeils 6 wird zuerst das Passieren des Anschlusspunktes 7 registriert, das diesen speziellen Anschlusspunkt markiert. Wenn die Ausfahrt am Anschlusspunkt 7 sehr spitzwinklig verläuft, besteht zunächst die Gefahr, dass auch eine Übereinstimmung der Fahrtrichtung des Fahrzeuges mit der Richtung des Autobahnverlaufs noch keinen sicheren Schluss zulässt, ob die Autobahn verlassen wurde oder noch weiter befahren wird.

Diese Entscheidung wird daher erst mit der Erkennung des Passierens des dem Anschlusspunkt 7 zugeordneten positiven Kontrollpunktes 8 getroffen. Wird dieser passiert, kann die Markierung des Anschlusspunktes 7 bestätigt und die Maut entsprechend abgerechnet werden.

Das gewählte Beispiel zeigt jedoch eine ungünstige Straßengeometrie, bei der das Fahrzeug nach dem Verlassen der Autobahn 1 über die Landstraßen 5 oder 4 an der Stelle 9 in die Nähe des positiven Kontrollpunktes 8 gelangen kann. Wegen der Toleranzen des Ortungssystems kann nicht sicher ausgeschlossen werden, dass der positive Kontrollpunkt 8 als solcher erkannt würde, auch wenn die Stelle 9 von der Autobahn 1 entfernt liegt. Damit würde die Markierung des Anschlusspunktes 7 bestätigt, als wäre das Fahrzeug auf der Autobahn geblieben und es käme zu einer fehlerhaften Berechnung der Maut-Gebühr.

Erfindungsgemäß sind jedoch dem hier aktuellen und markierten Anschlusspunkt 7 zwei negative Kontrollpunkte 10 und 11 zugeordnet, die auf dem Weg zur Stelle 9 von dem Fahrzeug passiert werden. Das Passieren eines dieser auf der herkömmlichen Wegstrecke angeordneten negativen Kontrollpunkte 10 und 11 hebt die Markierung des Anschlusspunktes 7 auf. Wenn das Fahrzeug nun an die Stelle 9 kommt, kann keine weitere Bestätigung mehr erfolgen. Das Passieren der negativen Kontrollpunkte 10 und 11 ist somit ein sicheres Indiz für das Befahren einer mautfreien Strecke.

Für diese sichere Entscheidung sorgt somit erst die Modellierung der zwei Kontrollpunkte 10 und 11, durch die das Nicht-Befahren des mautpflichtigen Abschnittes eindeutig erkannt wird. Das erfindungsgemäße Verfahren erlaubt es somit, nicht nur das mautpflichtige Straßennetz, sondern auch dessen Übergänge in das nicht mautpflichtige Straßennetz vollständig zu modellieren.

Ein weiteres Ausführungsbeispiel ist in Figur 2 gezeigt, bei dem die mautpflichtige Autobahn 1 durch einen Tunnel 12 führt. In diesem mautpflichtigen Straßenabschnitt besteht keine hinreichende GNSS-Versorgung. In diesem Fall kann ein Anschlusspunkt 13 vor dem Tunnel 12 modelliert werden, an dem das Fahrzeug auch bei erkanntem Anschlusspunkt 13 die Mautstrecke verlassen kann. Ein positiver Kontrollpunkt 14 ist hinter dem Tunnel 12 modelliert, wobei dieser hinreichend weit hinter dem Tunnel 12 liegen muss, um eine GNSS-Ortung sicherzustellen.

In diesem Beispiel schließt die Straßenführung nicht aus, dass der positive Kontrollpunkt 14 erkannt wird, obwohl das Fahrzeug um Tunnelgebühren zu sparen über die Abfahrt 15, den Weg 16 und die Auffahrt 17, die durch den positiven Kontrollpunkt 14 hindurchführt, erst hinter dem Tunnel 12 wieder auf das Mautnetz aufgefahren ist. Die Ersparnis der Tunnelgebühren kann erst durch Einführung der erfindungsgemäßen negativen Kontrollpunkte 18 garantiert werden, die wiederum die Markierung des Anschlusspunktes 13 aufheben und somit der eventuellen Bestätigung durch den positiven Kontrollpunkt 14 entgegenwirken.

Eine solche Situation ist beispielsweise bei Tunneln anzutreffen, die Ortsdurchfahrten entlasten oder die in Gebirgsregionen als Alternative zu Pässen dienen. Wiederum sind es die modellierten negativen Kontrollpunkte 18, die eine eindeutige Entscheidung ermöglichen, ohne auf Stützbaken zurückgreifen zu müssen. In diesem Fall wird also ein mautpflichtiger Straßenabschnitt, auf dem keine Positionsdaten zur Verfügung stehen, z.B. ein Tunnel, dadurch modelliert, dass der Anschlusspunkt auf einem in Fahrtrichtung vor dem mautpflichtigen Abschnitt befindlichen Straßenabschnitt liegen kann und/oder der positive Kontrollpunkt auf einem in Fahrtrichtung hinter dem mautpflichtigen Abschnitt befindlichen Straßenabschnitt liegen kann. Alle alternativ zum mautpflichtigen Abschnitt befahrbaren Straßenabschnitte werden durch negative Kontrollpunkte gekennzeichnet.

Grundlage für die Umsetzung des Verfahrens bildet ein realer Datenträger mit darauf gespeicherten Daten enthaltend Streckeninformation, auch in Form einer elektronischen Straßenkarte für ein Navigationssystem, wobei wahlweise der Datenträger lokal im Fahrzeug vorliegt (beispielsweise eine DVD) oder mittels eines mobilen Kommunikationssystems (z.B. GPRS oder UMTS) auf die entfernt gespeicherten Daten zugegriffen wird, wobei die Daten Ortskoordinaten von Anschlusspunkten enthalten, die Ein- und/oder Ausfahrten mautpflichtiger Straßenabschnitte zugeordnet sind. Zudem enthalten die Daten Ortskoordinaten von positiven Kontrollpunkten, die auf den mautpflichtigen Straßenabschnitten liegen, und Ortskoordinaten von negativen Kontrollpunkten, die auf Wegstrecken außerhalb der mautpflichtigen Straßenabschnitte liegen. Einem Anschlusspunkt ist mindestens ein positiver und mindestens ein negativer Kontrollpunkt zugeordnet, wobei zwischen dem Anschlusspunkt und den Kontrollpunkten jeweils eine unmittelbare und ununterbrochene Verbindung durch eine Wegstrecke besteht.

## Patentansprüche

1. Verfahren zur Registrierung des Passierens eines Anschlusspunktes (6,13), der auf einer ausgezeichneten Wegstrecke (1), insbesondere einem mautpflichtigen Straßenabschnitt, am Übergang zu einer anderen Wegstrecke (3,4,5), insbesondere einem nicht mautpflichtigen Straßenabschnitt oder einem abweichend zu tarifierenden anderen mautpflichtigen Straßenabschnitt, angeordnet ist, wobei mittels eines Ortungssystems die aktuelle Position ermittelt wird, wobei die aktuelle Position mit hinterlegten Anschlusspunkten (7,13) verglichen wird, wobei eine Übereinstimmung der aktuellen Position mit einem Anschlusspunkt den entsprechenden Anschlusspunkt als aktuellen Anschlusspunkt (7,13) markiert,
**dadurch gekennzeichnet,**
**dass** die Markierung des aktuellen Anschlusspunktes (7,13) durch das Passieren eines auf der anderen Wegstrecke (3,4,5) angeordneten negativen Kontrollpunktes (10,11,18) aufgehoben wird.

2. Verfahren nach Anspruch 1,
**dadurch gekennzeichnet,**
**dass** die Markierung des aktuellen Anschlusspunktes (7,13) durch das Passieren eines auf der ausgezeichneten Wegstrecke (1) angeordneten positiven Kontrollpunktes (8,14) bestätigt wird.

3. Verfahren nach Anspruch 1 oder 2,
**dadurch gekennzeichnet,**
**dass** die Kontrollpunkte (8,10,11,14,18) derart definiert werden, dass zwischen dem Anschlusspunkt (7,13) und den zugeordneten Kontrollpunkten (8,10,11,14,18) jeweils eine unmittelbare und/oder eine ununterbrochene Verbindung durch eine Wegstrecke besteht.

4. Verfahren nach einem der vorherigen Ansprüche,
**dadurch gekennzeichnet,**
**dass** einem Anschlusspunkt (7,13) einer oder mehrere negative Kontrollpunkte (10,11,18) zugeordnet werden.

5. Verfahren nach einem der vorherigen Ansprüche,
**dadurch gekennzeichnet,**
**dass** die aktuelle Position eines Kraftfahrzeugs mittels eines bordeigenen, insbesondere Satelliten gestützten, Ortungssystems ermittelt wird.

6. Verfahren nach einem der vorherigen Ansprüche,
**dadurch gekennzeichnet,**
**dass** die Anschlusspunkte (7,13) und die Kontrollpunkte (8,10,11,14,18) als Referenzpunkte in den Daten anhand ihrer jeweiligen Ortskoordinate modelliert sind, die im Zusammenhang mit einem Toleranzkreis (Radius) und/oder einem Toleranzquadrat (Kantenlänge) und/oder einer Richtung (Winkel mit Toleranz) und/oder Richtungsverlauf (mehrere nacheinander zu durchfahrende Winkel einschließlich Toleranzen) versehen werden.

7. Verfahren nach einem der vorherigen Ansprüche,
**dadurch gekennzeichnet,**
**dass** anhand der registrierten und bestätigten Anschlusspunkte (7,13) eine Benutzungsgebühr ("Maut") errechnet wird.

8. Verfahren nach einem der vorherigen Ansprüche,
**dadurch gekennzeichnet,**
**dass** die mittels eines Ortungssystems ermittelte Folge aktueller Positionen des Kraftfahrzeugs durch zusätzliche, mittels Interpolation errechnete Zwischenpositionen gestützt wird, wenn der Abstand zweier aufeinander folgender Positionen des Ortungssystems einen vorgegebenen Schwellwert überschreitet.

9. System zur Umsetzung des Verfahrens nach einem der vorherigen Ansprüche aufweisend ein Kraftfahrzeug mit einem bordeigenen Ortungssystem, das auf einen Datenträger mit darauf gespeicherter Streckeninformation zugreift, wobei der Datenträger lokal im Fahrzeug vorliegt oder wobei mittels eines Kommunikationssystems auf die entfernten Datenträger zugegriffen wird, und mit einem Bezahlsystem, das die Berechnung von mautpflichtigen Straßenabschnitten, die von dem Kraftfahrzeug befahren werden, ermöglicht, wobei die Streckeninformation Ortskoordinaten von Anschlusspunkten (7,13) enthält, die den mautpflichtigen Straßenabschnitten (1) zugeordnet sind,
**dadurch gekennzeichnet,**
**dass** die Streckeninformation Ortskoordinaten von negativen Kontrollpunkten (10,11,18) enthält, die jeweils einem Anschlusspunkt (7,13) zugeordnet sind und auf Wegstrecken außerhalb der mautpflichtigen Straßenabschnitte liegen.

10. System nach Anspruch 9,
**dadurch gekennzeichnet,**
**dass** die Streckeninformation Ortskoordinaten von positiven Kontrollpunkten (8,14) enthält, die jeweils einem Anschlusspunkt (7,13) zugeordnet sind und auf den mautpflichtigen Straßenabschnitten (1) liegen.

11. Realer Datenträger mit darauf gespeicherten Daten enthaltend Streckeninformation in Form einer elektronischen Straßenkarte für ein Navigationssystem, wobei die Daten Ortskoordinaten von Anschlusspunkten (7,13) enthalten, die Ein- und/oder Ausfahrten mautpflichtiger Straßenabschnitte (1) markieren,
**gekennzeichnet durch**
Ortskoordinaten von negativen Kontrollpunkten (10,11,18), die auf Wegstrecken (3,4,5) außerhalb der mautpflichtigen Straßenabschnitte liegen, wobei einem Anschlusspunkt (7,13) mindestens ein negativer Kontrollpunkt (10,11,18) zugeordnet ist, wobei zwischen dem Anschlusspunkt (7,13) und den Kontrollpunkten (10,11,18) jeweils eine unmittelbare und ununterbrochene Verbindung **durch** eine Wegstrecke besteht.

12. Datenträger nach Anspruch 11,
**gekennzeichnet durch**
Ortskoordinaten von positiven Kontrollpunkten, die den mautpflichtigen Straßenabschnitten zugeordnet sind, wobei einem Anschlusspunkt (7,13) mindestens ein positiver Kontrollpunkt (8,4) zugeordnet ist,
